# FASCICULE DE BREVET EUROPEEN

(11) **EP 1 347 686 B1**
(45) Date de publication et mention de la délivrance du brevet: **17.01.2007**
(21) Numéro de dépôt: 01995794.3
(22) Date de dépôt: 26.12.2001
(51) Int. Cl.: A23G 3/00, A23G 3/26

(54) **PROCEDE DE FABRICATION DE DRAGEES**
VERFAHREN ZUR HERSTELLUNG VON GEZUCKERTEN MANDELN
METHOD FOR MAKING SUGARED ALMONDS

(30) Priorité: 26.12.2000 FR 0017031
(43) Date de publication de la demande: 01.10.2003
(73) Titulaire: MARS, INCORPORATED, McLean, Virginia 22101-3883 (US)
(72) Inventeur: PICQUET, Alain, F-67310 Wasselone (FR); ZUGMEYER, Philippe, F-67700 Saverne (FR)
(74) Mandataire: Hirsch & Associés
(86) Numéro de dépôt international: PCT/FR2001/004198
(87) Numéro de publication internationale: WO 2002/051257

(56) Documents cités:
- EP-A- 0 819 387
- WO-A-00/38532
- WO-A-95/07621
- US-A- 4 792 453
- US-A- 4 828 845
- US-A- 5 376 389
- US-A- 6 110 515
- PATENT ABSTRACTS OF JAPAN vol. 006, no. 227 (C-134), 12 novembre 1982 (1982-11-12) & JP 57 129648 A (KANEBOU SHIYOKUHIN KK), 11 août 1982 (1982-08-11)

## Description

L'invention concerne la fabrication des dragées destinées à constituer une confiserie ou un élément de garniture notamment pour pâtisserie ou biscuit.

On sait que, au cours de leur fabrication, les dragées chocolatées subissent plusieurs applications d'une solution sucrée et colorée appelée sirop avant d'être enrobées par un sirop de polissage. Dans certains cas, par exemple lorsque la dragée est incorporée à la face externe d'un produit destiné à être glacé, la condensation qui se forme en surface de la dragée après ouverture de l'emballage provoque souvent la décoloration instantanée des dragées sur les doigts du consommateur lors de la manipulation du produit. Or il s'agit d'un inconvénient que le consommateur n'accepte généralement pas.

Un but de l'invention est de fournir un procédé de fabrication de dragées limitant le risque de décoloration des dragées lors de la manipulation et de la consommation du produit.

Pour cela, US-A-6,110,515 propose d'appliquer une barrière de protection sous la forme d'une fine couche de beurre de cacao ou équivalent autour de la périphérie extérieure soluble à l'eau.

En revanche, en vue de la réalisation de ce but, on prévoit selon l'invention un procédé de fabrication de dragées, dans lequel on enrobe un élément central successivement avec les substances suivantes :
- un sirop coloré,
- au moins deux couches de sirop incolore.

Ainsi le sirop incolore appliqué en plusieurs couches après la mise en place du sirop coloré et avant celle du sirop de polissage réduit considérablement les risques de décoloration de la dragée lors de la manipulation, notamment lors de la condensation si la dragée est initialement glacée.

Le procédé selon l'invention pourra également présenter au moins l'une des caractéristiques suivantes :
- l'une des deux couches de sirop incolore est une couche de sirop de polissage ;
- le sirop de polissage contient de la gomme ;
- le nombre de couches de sirop incolore est compris entre 1 et 8 ;
- la ou au moins une des couches de sirop incolore comprend un polysaccharide ;
- l'élément central contient du chocolat ; et
- l'élément central est choisi parmi le groupe constitué par : un morceau de fruit, éventuellement sec ou confit, un aliment soufflé, une composition gélifiée et une composition extrudée.

On prévoit également selon l'invention une dragée comprenant un élément central et, recouvrant cet élément, les couches successives suivantes :
- un sirop coloré, et
- au moins deux couches de sirop incolore.

La dragée selon l'invention pourra présenter au moins l'une des caractéristiques suivantes :
- la dragée est un élément de garniture destiné à une préparation alimentaire ;
- la dragée est congelée ou destinée à être congelée ; et
- la dragée est destinée à être cuite.

On prévoit également selon l'invention une préparation alimentaire comprenant une dragée selon l'invention.

Par exemple, il pourra s'agir d'une confiserie, d'une pâtisserie ou d'un biscuit. Et il pourra s'agir d'une préparation congelée.

D'autres caractéristiques et avantages de l'invention apparaîtront encore dans la description suivante d'un mode préféré de réalisation donné à titre d'exemple non limitatif. Aux dessins annexés :
- la figure 1 est une vue en coupe schématique d'une dragée selon l'invention ;
- la figure 2 est une vue en coupe partielle de la dragée de la figure 1 montrant la structure de sa surface ;
- la figure 3 est une vue schématique en coupe d'une turbine de mise en place des différentes couches sur la dragée ; et
- la figure 4 est une vue schématique en perspective d'une préparation alimentaire incorporant une dragée selon l'invention.

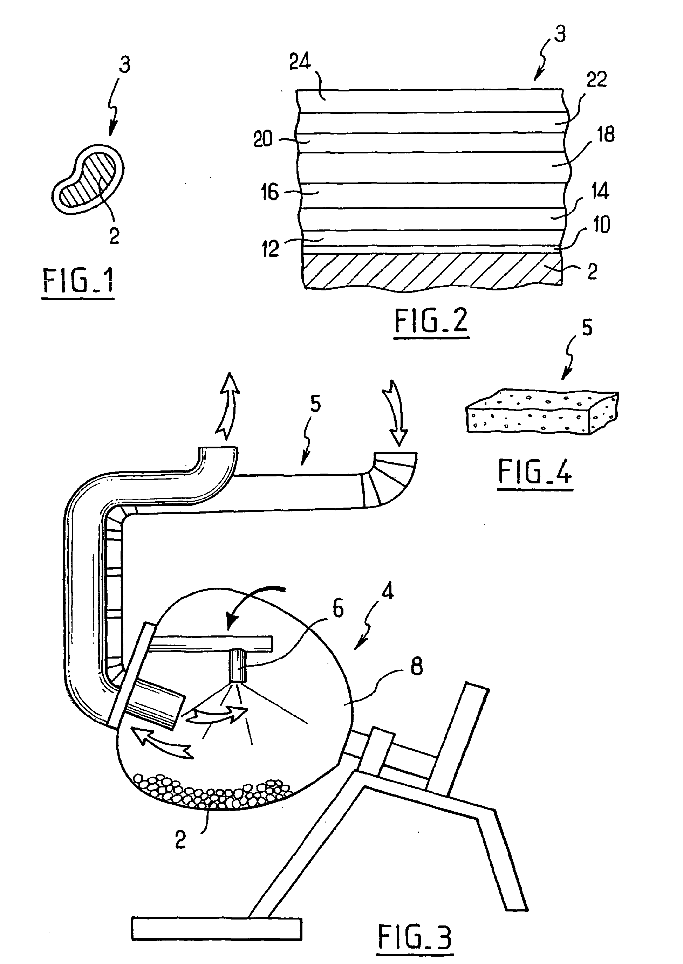

Dans le présent mode de mise en oeuvre du procédé de l'invention, la première étape consiste à mouler un centre 2 en chocolat en référence à la figure 1. La composition du centre est d'un type classique et ne sera pas détaillée.

Les centres 2 sont ensuite placés dans une turbine 4 illustrée à la figure 3 pour recevoir différentes couches destinées à enrober le centre 2. Cette turbine comprend des moyens de ventilation 5 et une buse 6 destinée à projeter sur les centres 2 les différentes couches devant recouvrir ces centres. Une telle turbine est connue en soi et ne sera pas décrite plus en détail. La turbine comprend une cuve 8 mobile à rotation autour de son axe durant l'enrobage, cet axe étant incliné par rapport à la verticale.

Les différentes couches sont mises en place sur les centres de la façon suivante.

On commence par appliquer sur les centres un mélange 10 à base de sucre glace et de dioxyde de titane (TiO₂) destiné à rendre les centres blancs.

Ensuite, on applique sur les centres une couche 12 de sirop froid destinée à donner de la souplesse à la surface des dragées. Ce sirop comprend de façon classique de l'eau et un polysaccharide.

On applique ensuite sur cette couche une couche 14 de sirop sans colorant, lui aussi comprenant de l'eau et un polysaccharide.

On poursuit le procédé en appliquant sur les dragées au moins une couche 16 de sirop avec colorant destinée à donner une certaine couleur à la dragée une fois celle-ci achevée.

Selon l'invention on applique ensuite plusieurs couches 18 d'un sirop sans colorant destiné à éviter la décoloration de la dragée dans les mains du consommateur. En l'espèce, ce sirop est un mélange comprenant 70 à 80 % de saccharose, entre 1 et 9 % d'eau et entre 1 et 5 % de glucose présentant un équivalent dextrose compris entre 35 et 46 DE. Le nombre de couches de sirop incolore mises en place à ce stade varie entre 1 et 8 suivant la composition du sirop utilisé et le degré de protection désiré. On notera qu'au-delà de 8 couches, une perte de l'intensité de la couleur de la dragée peut survenir.

Le sirop est appliqué dans la turbine à une température située de préférence entre 35 et 55 ° C et avantageusement d'environ 45° C. Le temps d'application en turbine varie de 7 à 10 minutes suivant la composition de la couche, de la température de l'air de séchage (qui a lui-même une température située entre 15 et 25 ° C) et de la vitesse de l'air (de préférence située entre 5 et 10 mètres par seconde).

Après mise en place du sirop incolore, on applique un sirop de polissage 20 connu en soi et qui comprend de l'eau, du sucre, du glucose et une gomme de caroube qui confère son élasticité à la surface du produit.

L'étape suivante consiste à installer sur la dragée une cire de polissage 22 comprenant notamment du carnauba en l'espèce.

La dernière couche 24 mise en place est une cire de brillance.

On obtient ainsi la dragée 3.

Ce procédé peut être mis en oeuvre pour divers types de dragées.

Ainsi le centre plutôt qu'être en chocolat pourra comprendre ou être constitué par un morceau de fruit sec (telle qu'une noix : amande, noisette, cacahouète, etc...). Il pourra également s'agir d'un produit extrudé, d'un aliment soufflé (notamment une céréale), d'un produit gélifié.

Les sirops incolores utilisés pourront être composés plus généralement de glucose, de sucrose ou de maltodextrines, et de façon générale d'un polysaccharide quelconque.

Les dragées ainsi obtenues peuvent être utilisées en tant que garniture pour toute confiserie ou produit pâtissier (gâteaux, biscuits, ...) 5 tel qu'illustré à la figure 4, à faible taux d'humidité, qu'il soit congelé ou non.

Les dragées ainsi obtenues ont les mêmes caractéristiques visuelles et de durée de vie que les dragées classiques. Toutefois grâce au procédé, leur décoloration dans les mains du consommateur prend entre 2 et 10 fois plus temps que pour des dragées classiques en fonction du nombre d'applications et de la composition du sirop incolore utilisé. Grâce aux dragées selon l'invention, on retarde voire on élimine tout phénomène de décoloration des dragées entre les mains du consommateur compte tenu du temps moyen de manipulation avant consommation, même si la dragée est consommée en étant glacée.

## Revendications

1. Procédé de fabrication de dragées (3), **caractérisé en ce qu'**on enrobe un élément central (2) successivement avec les substances suivantes:
- un sirop coloré (16), et
- au moins deux couches de sirop incolore (18,20).

2. Procédé selon la revendication 1, **caractérisé en ce que** l'une (20) des deux couches de sirop incolore est une couche de sirop de polissage.

3. Procédé selon la revendication 1 ou 2, **caractérisé en ce que** le sirop de polissage (20) contient de la gomme.

4. Procédé selon l'une quelconque des revendications 1 à 3, **caractérisé en ce que** le nombre de couches de sirop incolore (18) est compris entre 1 et 8.

5. Procédé selon l'une quelconque des revendications 1 à 4, **caractérisé en ce que** la ou au moins une des couches de sirop incolore (18) comprend un polysaccharide.

6. Procédé selon l'une quelconque des revendications 1 à 5, **caractérisé en ce que** l'élément central (2) contient du chocolat.

7. Procédé selon l'une quelconque des revendications 1 à 6, **caractérisé en ce que** l'élément central est choisi parmi le groupe constitué par: un morceau de fruit, éventuellement sec ou confit, un aliment soufflé, une composition gélifiée et une composition extrudée.

8. Dragée (3) **caractérisé en ce qu'**elle comprend un élément central (2) et, recouvrant cet élément, les couches successives suivantes :
- un sirop coloré (16), et
- au moins deux couches de sirop incolore (18,20).

9. Dragée selon la revendication 8, **caractérisé en ce que** l'une (20) des deux couches de sirop incolore est une couche de sirop de polissage.

10. Dragée selon la revendication 8 ou 9, fabriquée par le procédé selon l'une quelconque des revendications 1 à 7.

11. Dragée selon l'une quelconque des revendications 8 à 10, **caractérisé en ce que** la dragée est un élément de garniture destiné à une préparation alimentaire (5).

12. Dragée selon l'une quelconque des revendications 8 à 11, en ce que la dragée est congelée ou destinée à être congelée,

13. Dragée selon l'une quelconque des revendications 8 à 12, **caractérisé en ce que** la dragée est destinée à être cuite.

14. Préparation alimentaire (5), **caractérisé en ce qu'**elle comprend une dragée (3) selon l'une quelconque des revendications 8 à 13.

15. Préparation selon la revendication 14, en ce qu'il s'agit d'une confiserie, d'une patisserie ou d'un biscuit.

16. Préparation selon l'une quelconque des revendications 14 à 15, **caractérisé en ce que** qu'elle est congelée.

## Claims

1. A method for manufacturing coated comestible items (3), **characterised in that** a central core (2) is successively coated with the following substances:
- a colored syrup (16), and
- at least two layers of colorless syrup (18, 20).

2. Method according to claim 1, **characterised in that** one (20) of the two layers of colorless syrup is a layer of gloss coating syrup.

3. Method according to claim 1 or 2, **characterised in that** the gloss coating syrup (20) contains gum.

4. Method according to any of claims 1 to 3, **characterised in that** the number of layers of colorless syrup (18) is between 1 and 8.

5. Method according to any of claims 1 to 4, **characterised in that** the or at least one of the layers of colorless syrup (18) comprises a polysaccharide.

6. Method according to any of claims 1 to 5, **characterised in that** the central core (2) contains chocolate.

7. Method according to any of claims 1 to 6, **characterised in that** the central core is chosen from the group comprising: a piece of fruit, which may be dried or crystallised, a blown food item, a jellified composition and an extruded composition.

8. A coated comestible item (3), **characterised in that** it comprises a central core (2) and, covering this element, the following successive layers:
- a colored syrup (16), and
- at least two layers of colorless syrup (18, 20).

9. A coated comestible item according to claim 8, **characterised in that** one (20) of the two layers of colorless syrup is a layer of gloss coating syrup.

10. The coated comestible item according to either of claims 8 or 9, produced by the method according to any one of claims 1 to 7.

11. The coated comestible item according to either of claims 8 to 10, **characterised in that** the coated comestible item is a garnishing item intended for a food preparation (5).

12. The coated comestible item according to any of claims 8 to 11, **characterised in that** the coated comestible item is frozen or intended to be frozen.

13. The coated comestible item according to any of claims 8 to 12, **characterised in that** the coated comestible item is intended to be cooked.

14. Food preparation (5), **characterised in that** it comprises a coated comestible item (3) according to any of claims 8 to 13.

15. Preparation according to claim 14, **characterised in that** it involves a confectionery, a cake or pastry or a biscuit.

16. Preparation according to either of claims 14 to 15, **characterised in that** it is frozen.

## Patentansprüche

1. Verfahren zum Herstellen von Dragees (3), **dadurch gekennzeichnet, daß** ein zentrales Stück (2) sukzessiv mit den folgenden Substanzen ummantelt wird:
- einem gefärbtem Sirup (16) und
- mindestens zwei Schichten ungefärbten Sirups (18,20).

2. Verfahren nach Anspruch 1, **dadurch gekennzeichnet, daß** eine (20) der zwei Schichten ungefärbten Sirups eine Poliersirupschicht ist.

3. Verfahren nach Anspruch 1 oder 2, **dadurch gekennzeichnet, daß** der Poliersirup (20) Gummi enthält.

4. Verfahren nach einem der Ansprüche 1 bis 3, **dadurch gekennzeichnet, daß** die Anzahl der Schichten ungefärbten Sirups (18) zwischen 1 und 8 liegt.

5. Verfahren nach einem der Ansprüche 1 bis 4, **dadurch gekennzeichnet, daß** die Schicht ungefärbten Sirups oder zumindest eine der Schichten ungefärbten Sirups (18) Polysaccharid enthält.

6. Verfahren nach einem der Ansprüche 1 bis 5, **dadurch gekennzeichnet, daß** das zentrale Stück (2) Schokolade enthält.

7. Verfahren nach einem der Ansprüche 1 bis 6, **dadurch gekennzeichnet, daß** das zentrale Stück aus der Gruppe ausgewählt wird, die sich aus einem Stück Frucht, eventuell getrocknet oder eingelegt, einer Schaummasse, einer gelierten Masse und einer extrudierten Masse zusammensetzt.

8. Dragee (3), **dadurch gekennzeichnet, daß** es ein zentrales Stück (2) und folgende aufeinanderfolgende Schichten umfaßt, die dieses zentrale Stück umhüllen:
- einen gefärbten Sirup (16) und
- mindestens zwei Schichten ungefärbten Sirups (18, 20).

9. Dragee nach Anspruch 8, **dadurch gekennzeichnet, daß** die eine (20) der zwei Schichten ungefärbten Sirups eine Poliersirupschicht ist.

10. Dragee nach Anspruch 8 oder 9, das durch das Verfahren nach einem der Ansprüche 1 bis 7 hergestellt ist.

11. Dragee nach einem der Ansprüche 8 bis 10, **dadurch gekennzeichnet, daß** das Dragee als Garnierung für die Lebensmittelzubereitung (5) dient.

12. Dragee nach einem der Ansprüche 8 bis 11, **dadurch gekennzeichnet, daß** das Dragee tiefgekühlt oder tiefkühlbar ist.

13. Dragee nach einem der Ansprüche 8 bis 12, **dadurch gekennzeichnet, daß** das Dragee dazu bestimmt ist, gekocht zu werden.

14. Lebensmittelzubereitung (5), **dadurch gekennzeichnet, daß** sie ein Dragee (3) nach einem der Ansprüche 8 bis 13 umfaßt.

15. Zubereitung nach Anspruch 14, **dadurch gekennzeichnet, daß** es sich bei dieser Zubereitung um die Zubereitung einer Süßigkeit, eines Feingebäcks oder eines Kekses handelt.

16. Zubereitung nach einem der Ansprüche 14 bis 15, **dadurch gekennzeichnet, daß** sie unter Tiefkühlung stattfindet.
